# EUROPÄISCHE PATENTSCHRIFT

(11) **EP 3 918 229 B1**
(45) Veröffentlichungstag und Bekanntmachung des Hinweises auf die Patenterteilung: **01.03.2023**
(21) Anmeldenummer: 20705883.5
(22) Anmeldetag: 22.01.2020
(51) Int. Cl.: F16G 11/06, F16G 11/14, H01R 4/38, H01R 4/46

(54) **KREUZKLEMME**
CROSS CLAMP
SERRE-CÂBLE EN CROIX

(30) Priorität: 29.01.2019 DE 102019102114
(43) Veröffentlichungstag der Anmeldung: 08.12.2021
(73) Patentinhaber: VDM Metals International GmbH, 58791 Werdohl (DE)
(72) Erfinder: REMMEN, Uwe, 61440 Oberursel (DE)
(86) Internationale Anmeldenummer: PCT/DE2020/100037
(87) Internationale Veröffentlichungsnummer: WO 2020/156612

(56) Entgegenhaltungen:
- DE-B- 1 106 389
- DE-C- 566 298
- PFISTERER: "Railway Catenary Systems: The Power Connection", , 31. Dezember 2014 (2014-12-31), XP002798779, Gefunden im Internet: URL:http://intertech-eng.com.au/wp-content /uploads/2016/10/Railway-Catenary-Systems- 2014.pdf [gefunden am 2020-04-21]

## Beschreibung

Die Erfindung betrifft eine Kreuzklemme gemäß gattungsbildendem Teil des ersten Patentanspruchs.

Die DE 20 2004 012 345 U1 offenbart eine Kreuzklemme für die Verbindung von Drahtseilen, Stangen und Drähten. Ein im Wesentlichen zylinder- oder quaderförmiger Grundkörper weist auf einer Stirnseite einen quer durch die Längsachse bis zur Mitte des Grundkörpers oder weiterreichenden Schlitz auf, in dem ein radiales Gewindesackloch verläuft, mit dem 1,3- bis 2-fachen Durchmesser der Schlitzbreite. Eine Durchgangsbohrung verläuft quer durch die Längsachse des Grundkörpers im rechten Winkel zu dem Schlitz in dem Abstand von der Stirnseite, wobei der bevorzugt gerundete Boden des Schlitzes durchbrochen wird und in die Durchgangsbohrung ragt. Die Schlitzbreite und der Durchmesser der Durchgangsbohrung sind so dimensioniert, dass das vorgesehene Drahtseil, die Stange oder der Draht eingelegt bzw. durchgezogen werden kann. Die Schlitztiefe und das radiale Gewindesackloch sind so dimensioniert, dass das vorgesehene Drahtseil, die Stange oder der Draht eingelegt und durch einen eingeschraubten Gewindestift geklemmt werden kann. Der Grundkörper besteht bevorzugt aus Edelstahl.

Durch die DE 10 2005 057 397 A1 ist ein Profil für den Zusammenbau von Rahmenhaltevorrichtungen und tragenden Teilen oder ähnlichem bekannt geworden, das aus einem Profilkörper besteht, der im Querschnitt eine oder mehrere Flachseiten und einen oder mehrere Kreisabschnitte als Teile seines Umfangs mit einem vorgegebenen Durchmesser besitzt. An jeder Flachseite ist eine Längsrille mit parallelen Rändern ausgebildet, die Hinterschneidungen bilden. Der Profilkörper ist mit anderen Elementen mittels Klemmen verbindbar, die jede mindestens eine zylindrische Aufnahme begrenzt, deren Durchmesser mit dem der zylindrischen Fläche übereinstimmt, die von den Kreisabschnitten des Profilkörpers bestimmt wird. Die Klemmen weisen jeweils mindestens ein zusätzliches Zentriermittel auf, das dazu bestimmt ist, in die Längsrille entlang mindestens einer der Flachseiten einzugreifen.

In der EP 1 744 065 B1 wird eine Kreuzklemmvorrichtung abgehandelt, die zur Verbindung einer ersten und einer zweiten Stange geeignet ist. Die Kreuzklemme beinhaltet mindestens einen Klemmkörper, der bedarfsweise aus synthetischem Material besteht, insbesondere aus Polyamid, das mit Glasfasern verstärkt ist, hergestellt wurde. Alternativ kann der Klemmkörper auch aus einem Metall hergestellt werden, insbesondere durch Präzisionsguss.

Die DE 566 298 offenbart eine Einrichtung an Klemmen für elektrische Leitungen aus verschiedenen Metallen, bspw. Kupfer- und Aluminium-Leitungen, die mittels aus Doppelmetallen bestehenden Zwischenlagen miteinander verbunden werden.

Der DE 966 962 ist eine Klemme für elektrische Leitungen zu entnehmen, die aus verschiedenen Werkstoffen bestehen. Sämtliche mit den Leitern in Berührung kommenden Klemmteile sind aus nicht rostendem Stahl hergestellt.

Durch die DE 1 106 389 ist eine Endbund- oder Abspannklemme bekannt geworden. In die in einen Abzweigleiter umfassenden Klemmbacken sind schmale Leiterlager aus dem Werkstoff des Abzweigleiters eingegossen oder eingepresst.

Der Literaturstelle "PFISTERER: "Railway Catenary Systems: The Power Connection", 31 Dezember 2014 (2014-12-31)" ist auf den Blattseiten 61, 64 und 65 eine Klemme zu entnehmen, bestehend aus mehreren profilierten aus einer CuNiSi-Legierung gebildeten Metallbauteilen, deren Profile dergestalt ausgebildet sind, dass in einander zugewandter Bauweise Ausnehmungen zur Aufnahme mehrerer aus einer Al-Legierung bestehenden Drahtseilen gebildet sind, wobei zumindest die den Bauteilen zugewandten Oberflächenabschnitte der Profile mit einem Materila versehen sind, das zumindest weitgehend dem Werkstoff der Drahtseile entspricht.

Für manche Anwendungsfälle einer metallischen Kreuzklemme in Wirkverbindung mit einem metallischen Drahtseil kommen Werkstoffe zum Einsatz, die im montierten Zustand chemische Reaktionen untereinander bewirken. Dies gilt bspw. für Kreuzklemmen aus Aluminium im Bereich derer Kupferseile festgelegt werden. Zur Reduzierung der Reaktion von Lokalelementen werden die Kupferseile bspw. mit einer Bimetallhülse (innen Kupfer, außen Aluminium) montiert. Diese Montage ist zum einen aufwendig und vor allem besteht das Problem, dass die Teile nach einer gewissen Zeit als solches Bauteil kaum mehr zu erkennen sind. Möglicherweise ist die Verformung auf thermische Überlastung zurückzuführen.

Der Erfindung liegt die Aufgabe zugrunde, eine Kreuzklemme bereitzustellen, die auch bei Unverträglichkeit der zum Einsatz gelangenden Materialien für die Bauteile der Kreuzklemme, respektive die verwendeten Drahtseile, keine lokalen chemischen Reaktionen mehr auftreten können.

Die Aufgabe wird dadurch gelöst, dass zumindest die den Drahtseilen zugewandten Profile der Bauteile mit einer Al-Legierung beschichtet sind, dergestalt, dass zumindest die den Drahtseilen zugewandten Profile der Bauteile durch Kaltgasspritzen mit einer Schicht aus einer Al-Legierung beschichtet sind.

Vorteilhafte Weiterbildungen des Erfindungsgegenstandes sind den Unteransprüchen zu entnehmen.

Eine bevorzugte Ausführungsform des Erfindungsgegenstandes sieht vor, dass zumindest einzelne Teile der Kreuzklemme aus einer CuNiSi-Legierung (CuNi2Si) und die Drahtseile aus einer Al-Legierung bestehen.

Vorzugweise sind zumindest die den Drahtseilen zugewandten Profile der Bauteile mit einer Al-Legierung beschichtet.

Einem weiteren Gedanken der Erfindung gemäß ist vorgesehen, dass zumindest die den Drahtseilen zugewandten Profile der Bauteile durch Kaltgasspritzen mit einer Schicht aus einer Al-Legierung versehen werden, wobei die Schichtstärke der Al-Legierung zwischen 600 und 1000 µm beträgt.

Von Vorteil kann auch sein, dass neben den Profilen der Bauteile auch periphere Bereiche außerhalb der Drahtseilführung mit einer Beschichtung aus einer Al-Legierung versehen werden.

Gegenüber dem Stand der Technik besteht die erfindungsgemäße Idee darin, das Materialverhältnis der zum Einsatz gelangenden Elemente (Kreuzklemmbauteile/Drahtseile) umzukehren und als Schutz für das Aluminiumdrahtseil die Profile der Klemmbauteile mit einer Aluminiumschicht zu versehen.

Unter einer Umkehrung des Materialverhältnisses versteht der Fachmann folgendes:
Fertigung einer Kreuzklemme, bspw. aus Kuprodur A (CuNi2Si) und Auftragen einer Aluminiumschicht in den Bereichen der Seildurchführung bspw. mittels Kaltspritzverfahrens. Mittels dieses Verfahrens wird bei dem genannten Anwendungsfall bspw. eine 800 µm starke Schicht auf den Durchführungsbereich und bedarfsweise auf den Stirnflächen der Kreuzklemmbauteile aufgetragen. In diesem Verfahren wird der Beschichtungswerkstoff (Al-Legierung) mit höherer Geschwindigkeit und stark reduzierter Gastemperatur als beim Hochgeschwindigkeitsflammspritzen auf den Grundstoff der Kreuzklemmbauteile aufgetragen. Die große Aufprallenergie der Partikel auf die Werkstoffoberfläche führt zu äußerst dichten, praktisch porenfreien Schichten mit hoher Haftfestigkeit zum Trägerwerkstoff.

Diese Beschichtungsform kann bei allen Bauteilen gleicher Konstellation eingesetzt werden. Insbesondere kommen hier Kreuzklemmenbauteile aus Metall zum Einsatz, die in Verbindung mit aufzunehmenden Drahtseilen aus andersartigen Materialien Werkstoffprobleme mit sich bringen.

Der Erfindungsgegenstand ist anhand eines Ausführungsbeispiels in der Zeichnung dargestellt und wird wie folgt beschrieben. Es zeigen:
- Fig. 1: Darstellung einer erfindungsgemäßen Kreuzklemme in verschiedenen Ansichten;
- Fig. 2/3: Darstellung von Einzelteilen der Kreuzklemme gemäß Fig. 1.

Die erfindungsgemäße Kreuzklemme besteht aus einem Oberklemmteil 1, einem Zwischenstück 2 sowie einem Unterklemmteil 3. Die Bauteile 1 - 3 sind über eine Schraube 4 sowie eine Mutter 5 miteinander in Wirkverbindung bringbar. Im Bereich der Schraube 4 befindet sich noch eine Unterlegscheibe 6. Zwischen Zwischenstück 2 und Unterklemmteil 3 ist noch ein O-Ring 7 vorgesehen.

Das Oberklemmteil 1, das Zwischenstück 2, sowie das Unterklemmteil 3 bestehen in diesem Beispiel aus einer CuNi2Si-Legierung. In diesem Beispiel sollen zwischen dem Oberklemmteil 1 und dem Zwischenstück 2 Drahtseile 8, 9 aus einer Kupferlegierung verlaufen. Zwischen Zwischenstück 2 und Unterklemmteil 3 soll in diesem Beispiel ein aus einer Aluminiumlegierung bestehendes Drahtseil 10 eingebracht sein. Während die Materialkombination zwischen Oberklemmteil 1 und Zwischenstück 2 im Berührungsbereich der Drahtseile 8, 9 unkritisch ist, kommt es zwischen dem Zwischenstück 2 und dem Unterklemmteil im Führungsabschnitt für das aus einer Aluminiumlegierung bestehende Drahtseil 10 zu chemischen Reaktionen. Da derartige Bauteile vielfach Witterungsverhältnissen ausgesetzt sind, kommt es an der Verbindungsstelle von Aluminium und Kupfer bei Vorhandensein von Feuchtigkeit zu einer elektrochemischen Reaktion durch Kontaktelementbildung.

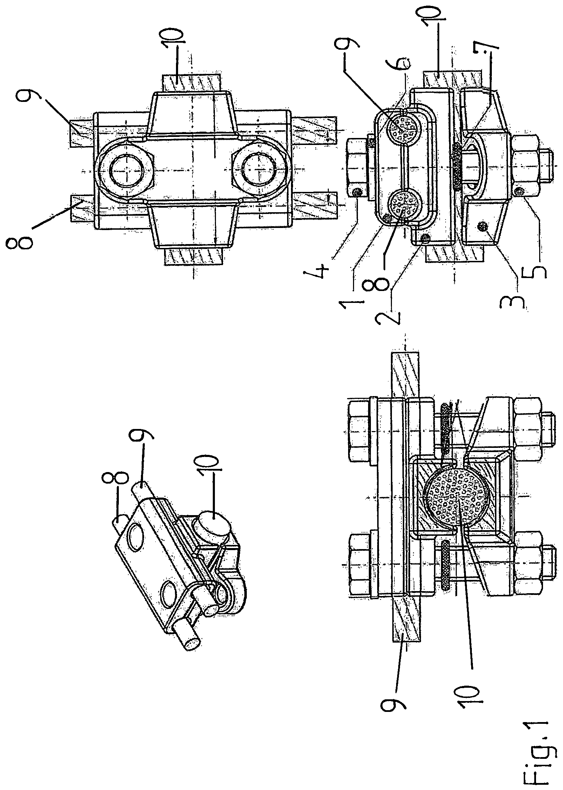

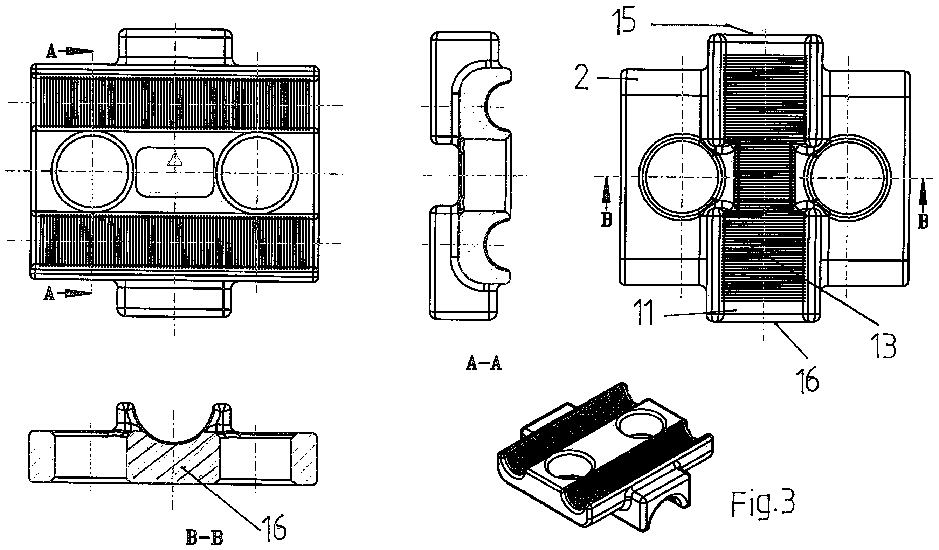

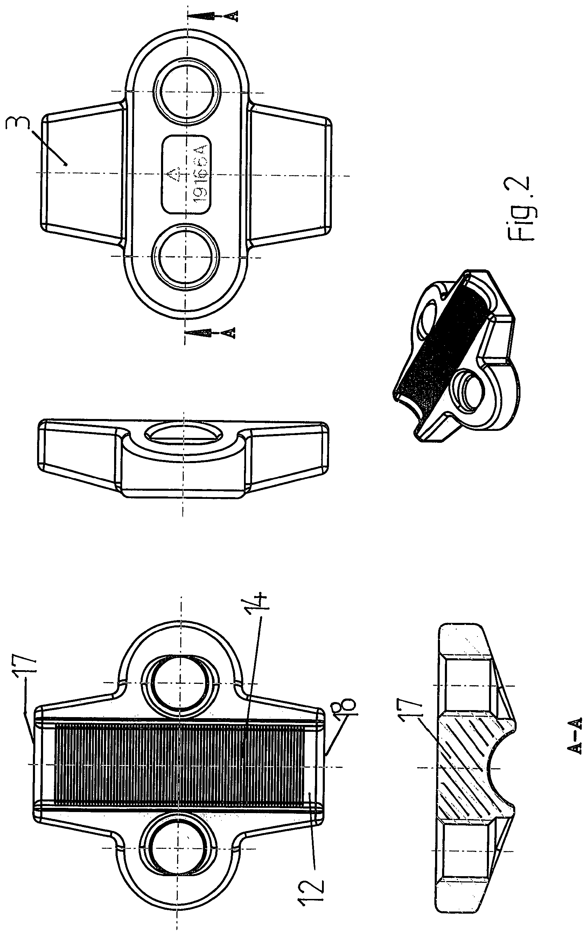

Die Figuren 2 und 3 zeigen einerseits das Unterklemmteil 3 und andererseits das Zwischenstück 2. Auch hier erfolgt die Darstellung in verschiedenen Ansichten, um die Problemlösung besser aufzeigen zu können. Das Unterklemmteil 3 sowie das Zwischenstück 2 weisen einander zugewandte Profile 11, 12 auf, die in aufeinanderliegender Form das aus einer Aluminiumlegierung bestehende Drahtseil 10 zwischen sich aufnehmen (Fig. 1). Zumindest die, dem Drahtseil 10 zugewandten Oberflächenabschnitte 13, 14 der Profile 11, 12, sind mit einem Material beschichtet, das zumindest weitestgehend dem Werkstoff (AI-Legierung) des Drahtseils 10 entspricht.

Wie in Fig. 1 angesprochen, bestehen das Oberklemmbauteil 1, das Zwischenstück und das Unterklemmteil 3 aus einer CuNi2Si-Legierung. Die Bereiche 13, 14 einerseits des Unterklemmteils 3 und andererseits des Zwischenstücks 2 sind zumindest über die Länge der Drahtseilführung mit einer Al-Legierung beschichtet.

Die Al-Beschichtung soll in diesem Beispiel durch Kaltgasspritzen erzeugt werden, wobei die Schichtstärke 800 µm betragen soll.

Darüber hinaus besteht die Möglichkeit, auch die Stirnflächen 15, 16, 17, 18 durch Kaltgasspritzen mit einer Schicht aus einer Al-Legierung zu versehen.

### Bezugszeichenliste

- 1: Oberklemmteil
- 2: Zwischenstück
- 3: Unterklemmteil
- 4: Schraube
- 5: Mutter
- 6: Unterlegscheibe
- 7: O-Ring
- 8: Drahtseil
- 9: Drahtseil
- 10: Drahtseil
- 11: Profil
- 12: Profil
- 13: Oberflächenabschnitt
- 14: Oberflächenabschnitt
- 15: Stirnfläche
- 16: Stirnfläche
- 17: Stirnfläche
- 18: Stirnfläche

## Patentansprüche

1. Kreuzklemme, bestehend aus mehreren profilierten aus einer CuNiSi-Legierung gebildeten Metallbauteilen (1, 2, 3), deren Profile (11, 12) dergestalt ausgebildet sind, dass in einander zugewandter Bauweise Ausnehmungen zur Aufnahme mehrerer aus einer Al-Legierung bestehenden Drahtseile (8, 9, 10) gebildet sind, wobei zumindest die den Drahtseilen (8, 9, 10) zugewandten Oberflächenabschnitte der Profile (11, 12) mit einem Material versehen sind, das zumindest weitestgehend dem Werkstoff der Drahtseile (8, 9, 10) entspricht, **dadurch gekennzeichnet, dass** zumindest die den Drahtseilen (10) zugewandten Profile (11, 12) der Bauteile (1 - 3) mit einer Al-Legierung beschichtet sind, dergestalt, dass zumindest die den Drahtseilen (10) zugewandten Profile (11, 12) der Bauteile (1 - 3) durch Kaltgasspritzen mit einer Schicht aus einer Al-Legierung beschichtet sind.

2. Kreuzklemme nach Anspruch 1, **dadurch gekennzeichnet, dass** die einzelnen Teile (1 - 3) der Kreuzklemme aus einer CuNi2Si-Legierung bestehen.

3. Kreuzklemme nach Anspruch 1 oder 2, **dadurch gekennzeichnet, dass** die Schichtstärke der Al-Legierung zwischen 600 und 1000 arm beträgt.

4. Kreuzklemme nach einem der Ansprüche 1 - 3, **dadurch gekennzeichnet, dass** neben den Profilen (11, 12) der Bauteile (1 - 3) auch periphere Bereiche (15, 16, 17, 18) außerhalb der Drahtseilführung mit einer Beschichtung aus einer Al-Legierung versehen sind.

## Claims

1. Cross clamp, consisting of a plurality of profiled metal components made (1, 2, 3) from a CuNiSi alloy, the profiles (11, 12) of which are formed in such a manner that, in a configuration in which the components face one another, recesses are formed to receive a plurality of wire cables (8, 9, 10) made from an Al alloy, wherein at least the surface sections of the profiles (11, 12) facing the wire cables (8, 9 10) are provided with a material which corresponds at least as far as possible to the material of the wire cables (8, 9, 10), **characterized in that** at least the profiles (11, 12) of the components (1-3) that face the wire cables (10) are coated with an Al alloy, such that at least the profiles (11, 12) of the components (1-3) that face the wire cables (10) are coated with an Al alloy layer by cold gas spraying.

2. Cross clamp according to Claim 1, **characterized in that** at least the individual parts (1-3) of the cross clamp are made from a CuNi2Si alloy.

3. Cross clamp according to Claim 1 or 2, **characterized in that** the layer thickness of the Al alloy is between 600 and 1000 µm.

4. Cross clamp according to any one of Claims 1-3, **characterized in that**, besides the profiles (11, 12) of the components (1-3), peripheral areas (15, 16, 17, 18) outside the wire cable guide are also provided with a coating of an Al alloy.

## Revendications

1. Serre-câble en croix, composé de plusieurs composants métalliques (1, 2, 3) profilés formés d'un alliage CuNiSi, dont les profilés (11, 12) sont constitués de telle manière que des évidements destinés à loger plusieurs câbles métalliques (8, 9, 10) composés d'un alliage d'aluminium Al sont formés d'un mode de construction les disposant tournés l'un vers l'autre, sachant qu'au moins les sections de surface des profilés (11, 12), tournées vers les câbles métalliques (8, 9, 10) sont dotées d'un matériau, qui correspond au moins dans une large mesure à la matière des câbles métalliques (8, 9, 10), **caractérisé en ce qu'**au moins les profilés (11, 12) des composants (1-3), tournés vers les câbles métalliques (10) sont revêtus d'un alliage d'aluminium Al de telle manière qu'au moins les profilés (11, 12) des composants (1-3), tournés vers les câbles métalliques (10) sont revêtus par projection de gaz à froid d'une couche d'un alliage d'aluminium (Al) .

2. Serre-câble en croix selon la revendication 1, **caractérisé en ce que** les parties individuelles (1-3) du serre-câble en croix sont composées d'un alliage CuNi2Si.

3. Serre-câble en croix selon la revendication 1 ou 2, **caractérisé en ce que** l'épaisseur de couche de l'alliage d'aluminium Al se situe entre 600 et 1000 pm.

4. Serre-câble en croix selon l'une quelconque des revendications 1-3, **caractérisé en ce qu'**en plus des profilés (11, 12) des composants (1-3), les zones périphériques (15, 16, 17, 18) en dehors du guidage de câble métallique sont également dotées d'un revêtement en alliage d'aluminium Al.
